Europäisches Patentamt

European Patent Office

Office européen des brevets

(19)

(11) Veröffentlichungsnummer: **0 243 896**
**B1**

(12) **EUROPÄISCHE PATENTSCHRIFT**

(45) Veröffentlichungstag der Patentschrift:
**31.01.90**

(51) Int. Cl.⁴: **F 16 C 3/08**

(21) Anmeldenummer: **87106008.3**

(22) Anmeldetag: **24.04.87**

(54) Einteilige Kurbelwelle für Hubkolbenmaschinen, insbesondere mehrzylindrige Brennkraftmaschinen.

(30) Priorität: **30.04.86 DE 3614722**

(43) Veröffentlichungstag der Anmeldung:
**04.11.87 Patentblatt 87/45**

(45) Bekanntmachung des Hinweises auf die Patenterteilung:
**31.01.90 Patentblatt 90/5**

(84) Benannte Vertragsstaaten:
**ES FR GB IT SE**

(56) Entgegenhaltungen:
**EP-A- 0 068 114**
**DE-A- 3 235 376**
**GB-A- 2 064 719**

**MOTORTECHNISCHE ZEITSCHRIFT, Band 27, Nr. 6, Juni 1966, Stuttgart; M. PFENDER et al.: "Einfluss der Formgebung auf die Spannungsverteilung in Kurbelkröpfungen"**

(73) Patentinhaber: **Bayerische Motoren Werke Aktiengesellschaft, Patentabteilung AJ-3 Postfach 40 02 40 Petuelring 130, D-8000 München 40 (DE)**

(72) Erfinder: **Kerzendorf, Gerhard, Am Strassland 4, D-8011 Kirchheim (DE)**

(74) Vertreter: **Bücken, Helmut, Bayerische Motoren Werke Aktiengesellschaft Postfach 40 02 40 Petuelring 130 - AJ-30, D-8000 München 40 (DE)**

**Beschreibung**

Die Erfindung geht gemäß dem Oberbegriff des unabhängigen Patentanspruches von der DE-OS 3 235 376 aus.

Für die Auslegung von Kurbelwellen für Brennkraftmaschinen der bekannten Bauart findet die Berechnungsmethode mittels Formzahlen Anwendung. Diese Formzahlen sind u.a. von den Parametern Wangendicke und Wangenbreite abhängig. Dagegen wird z.B. die Wangenform bei den Formzahlen nicht berücksichtigt. Die Wangenform wird u.a. vom außen- und innenseitigen Übergang der Kurbelwange vom Hubzapfen zum Lagerzapfen wesentlich mitbestimmt.

In einer einfachen Ausgestaltung des außenseitigen Überganges ist es bekannt, zur Verringerung der Masse der Kurbelwelle an den Kurbelwangen in gering beanspruchten Werkstoffbereichen ebenflächige Schrägen vorzusehen. Ferner ist es durch die eingangs genannte Druckschrift bekannt, den außenseitigen Übergang der Kurbelwange vom Hubzapfen zum Lagerzapfen rotationssymmetrisch zu gestalten, wobei die anfangs mäßig zunehmende Wangendicke mit zunehmender Annäherung an den Lagerzapfen relativ stark bis auf den maximalen Wert der Wangendicke zunimmt. Spannungsuntersuchungen an derartigen Kurbelwellen zeigen zum einen einen ungünstigen Spannungsverlauf sowohl in der Kurbelwange selbst als auch in den anschließenden Zapfen. Zum anderen sind im Übergang der relativ schwach zunehmenden Wangendicke zu der relativ stark zunehmenden Wangendicke hohe Spannungswerte zu beobachten. Als Nachteil ergibt sich hieraus ein ungünstiges Verhältnis von Wangenmasse zu Wangen-Steifigkeit.

Der Erfindung liegt die Aufgabe zugrunde, das Verhältnis von Wangenmasse zu Wangensteifigkeit derart zu verbessern, daß mit einer im wesentlichen gleichen Wangenmasse eine höhere Steifigkeit erreicht ist.

Diese Aufgabe wird durch die im Kennzeichen des unabhängigen Patentanspruches angegebenen Merkmale gelöst. Der Vorteil der Erfindung ist eine bessere Werkstoffausnutzung mit stärker gegenseitig beabstandeten Spannungsverläufen bei einer deutlichen Reduzierung von Spannungsspitzenwerten.

Weitere vorteilhafte Ausgestaltungen der Erfindung sind in den Unteransprüchen angegeben.

Mit der Erfindung wird ein optimales Verhältnis von Wangenmasse zu Wangensteifigkeit erreicht. Dies ergibt bei geringerem Gewicht der Kurbelwelle eine Verringerung der Massenkräfte. Weiter ist durch die höhere Steifigkeit die Körperschallanregung in den Hauptlagern der Brennkraftmaschine verringert und ferner zugleich der Lagerschiefstand reduziert.

Die Erfindung ist anhand eines in der Zeichnung dargestellten Ausführungsbeispiels beschrieben. Es zeigen:

Fig. 1 eine nur teilweise dargestellte, einteilige Kurbelwelle für eine Brennkraftmaschine mit einer halben Kröpfung in Seitenansicht,

Fig. 2 die Kurbelwange nach Fig. 1 in Stirnansicht mit dem außenseitigen Übergang vom Hubzapfen zum Lagerzapfen,

Fig. 3 die Kurbelwange nach Fig. 1 in Stirnansicht des innenseitigen Überganges vom Hubzapfen zum Lagerzapfen.

Bei einer einteiligen Kurbelwelle 1 für eine nicht dargestellte, mehrzylindrige Brennkraftmaschine sind ein Hubzapfen 2 vom Radius r und ein Lagerzapfen 3 vom Radius R mit ihren Achsen 4 und 5 in einer Hubebene $E_H$ angeordnet und durch eine mit ihrer Breite quer zur Hubebene $E_H$ gerichteten Kurbelwange 6 verbunden. Vom Hubzapfen 2 zum Lagerzapfen 3 hin nimmt die Kurbelwange außenseitig in ihrer Dicke zu, wobei im Bereich einer Überdeckung 7 von Hubzapfen 2 und Lagerzapfen 3 bzw. von den jeweiligen Zapfen 2, 3 zugeordneten Anlaufbunden 8 und 9 an der Kurbelwange 6 die maximale Wangendicke «a» gegeben ist. Der Grad der Überdeckung 7 ist durch ein in der Hubebene $E_H$ zwischen der Oberkante 10 des Hubzapfens 2 und der Oberkante 11 des Anlaufbundes 9 festgelegtes Abstandsmaß «b» bestimmt.

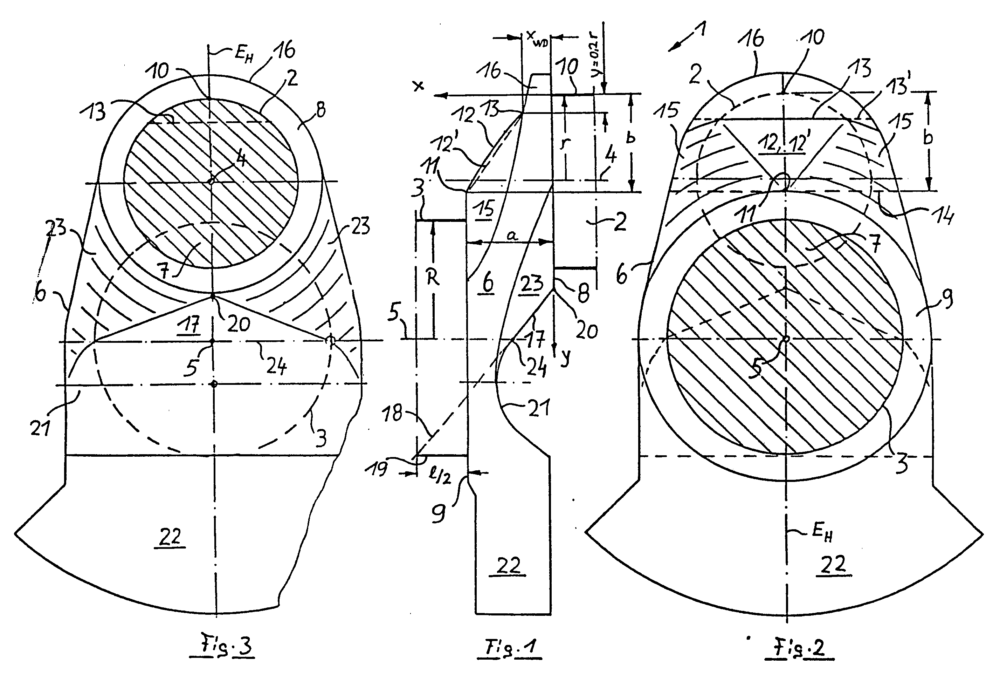

Die Kurbelwange 6 weist vom Hubzapfen 2 zum Lagerzapfen 3 einen außenseitigen Übergang 12 auf, der im wesentlichen durch die Kurve «y» = $(x/2)^n$ begrenzt ist, wobei der Exponent «n» aus der Beziehung: $n = \log_{a/2} b$ bestimmt ist. Für die Koordinaten y und x ist in der Fig. 1 an der Kurbelwelle 1 ein Koordinatenkreuz mit der Ordinate y und mit der Abszisse für x festgelegt. Die vorgenannte Kurve «y» verläuft zwischen einer im Abstand y = 0,2 r von der Oberkante 10 des Hubzapfens 2 und nach vorgenannter und umgestellter Gleichung ermittelten Wangendicke $x = 2(0,2 r)^{1/n}$ und der von der Oberkante 10 des Hubzapfens entsprechend einem Abstand y = b an der Oberkante 11 des lagerzapfenseitigen Anlaufbundes 9 festgelegten maximalen Wangendicke «a», Fig. 1 und 2. Mit dieser Wangenform ist eine optimale Ausnutzung der Wangenmasse zur Erzielung einer hohen Steifigkeit gegen Biege- und Torsionsbelastung erreicht.

Der durch die Kurve «y» flachgewölbte Übergang 12 ist an der Stelle der Wangendicke $x_{WD}$ durch eine Kante 13 begrenzt, die, wie aus Fig. 2 durch die strichlierte Linie 13' veranschaulicht ist, über die gesamte Breite der Kurbelwange verlaufen kann. Parallel zur Kante 13' ist eine den Anlaufbund 9 an der Oberkante 11 tangierende gestrichelte Linie 14 gezeigt, die bei einem über die gesamte Breite der Kurbelwange sich erstreckenden Übergang 12 eine weitere Kante darstellt. Um das Gewicht der Kurbelwelle jedoch gering zu halten, geht der Übergang beiderseits der Hubebene $E_H$ in als Kegelmantelabschnitt gestaltete und zur Achse 5 des Lagerzapfens 3 rotationssymmetrische Bereiche 15 über, und zwar derart, daß die Kante 13 in ihrer Länge als Sehne über dem den Hubzapfen 2 vom Radius r begrenzenden Kreis verbleibt.

Zur weiteren Gewichtsreduzierung und für eine einfachere Fertigung kann anstelle des gewölbten Überganges 12 ein als ebenflächige Schräge gestalteter Übergang 12' vorgesehen sein. Der durch eine gestrichelte Linie veranschaulichte Übergang 12' erstreckt sich von der durch die Wangendicke $x_{WD} = 2 (0,2 r)^{1/n}$ festgelegten Kante 13 aus und tangiert die Oberkante 11 bzw. einen Umfangsbereich des lagerzapfenseitigen Anlaufbundes 9.

An die Kante 13 schließt sich, unabhängig vom jeweiligen Übergang 12 bzw. 12', ein freigestaltbarer Fortsatz 16 an, dessen im wesentlichen radiale Erstreckung durch den Radius des hubzapfenseitigen Anlaufbundes 8 bestimmt ist.

Weiter weist die Kurbelwange 6 vom Hubzapfen zum Lagerzapfen 3 innenseitig eine abnehmende Dicke auf, wobei ein Teil dieser Verjüngung über eine ebene Schräge 17 bewirkt ist. Diese Schräge 17 ist, wie aus der Seitenansicht der Kurbelwelle 1 in Fig. 1 hervorgeht, mit einer in der Hubebene $E_H$ verlaufenden Verbindungsgeraden 18 gleichgerichtet. Einerseits schneidet die Verbindungsgerade 18 den Lagerzapfen 3 auf halber Länge l/2 an der Unterkante 19 und andererseits tangiert sie den hubzapfenseitigen Anlaufbund 8 an seiner Unterkante 20 bzw. seinen Umfangsbereich. Die Schräge 17 geht ferner im Bereich der Achse 5 des Lagerzapfens durch eine über die Breite der Kurbelwange 6 sich erstreckende Verrundung 21 in ein an der Kurbelwange 6 angeordnetes Gegengewicht 22 über. An die Schräge 17 schließen, wie aus Fig. 3 hervorgeht, beiderseits der Hubebene $E_H$ als Kegelmantelabschnitte gestaltete und zur Achse 4 des Hubzapfens 2 rotationssymmetrische Bereiche 23 an, und zwar derart, daß die Anschlußstelle 24 der Verrundung 21 an die Schräge 17 in einer etwa dem Durchmessermaß 2 R des Lagerzapfens entsprechenden Breite verbleibt. Damit ist die Kurbelwange 6 auch innenseitig hinsichtlich Gewicht und Steifigkeit optimal gestaltet, so daß insgesamt eine Verbesserung der statischen und dynamischen Eigenschaften der Kurbelwelle 1 erreicht ist.

**Patentansprüche**

1. Einteilige Kurbelwelle für Hubkolbenmaschinen, insbesondere mehrzylindrige Brennkraftmaschinen, bei der ein Hubzapfen (2) vom Radius (r) und ein Lagerzapfen (3) vom Radius (R) mit ihren Achsen (4, 5) in einer Hubebene ($E_H$) angeordnet und durch eine mit ihrer Breite quer zur Hubebene ($E_H$) gerichteten Kurbelwange (6) verbunden sind, und die Dicke der Kurbelwange außenseitig vom Hubzapfen zum Lagerzapfen hin zunimmt, wobei im Bereich einer Überdeckung (7) von Hub- und Lagerzapfen bzw. von den jeweiligen Zapfen (2, 3) zugeordneten Anlaufbunden (8, 9) an der Kurbelwange eine maximale Wangendicke (a) gegeben ist, und der Grad der Überdeckung (7) durch ein in der Hubebene zwischen der Oberkante (10) des Hubzapfens und einer Oberkante (11) des Lagerzapfens oder dessen Anlaufbundes (9) festgelegtes Abstandsmaß (b) bestimmt ist, dadurch gekennzeichnet, daß ein außenseitiger Übergang (12, 12') der Kurbelwange (6) vom Hubzapfen (2) zum Lagerzapfen (3) im wesentlichen durch die Kurve «y» = $(x/2)^n$ und der Exponent (n) aus n = $\log_{a/2} b$ bestimmt ist, wobei die Kurve «y» zwischen einer im Abstand y = 0,2·r von der Oberkante (10) des Hubzapfens (2) und nach o.g. umgestellter Gleichung ermittelten Wangendicke $x_{WD} = 2 \cdot (0,2 \cdot r)^{1/n}$ und der von der Oberkante (10) des Hubzapfens entsprechend einem Abstand y = b an der Oberkante (11) des lagerzapfenseitigen Anlaufbundes (9) festgelegten maxim. Wangendicke (a) verläuft.

2. Kurbelwelle nach Anspruch 1, dadurch gekennzeichnet, daß der Übergang (12) an der Stelle der Wangendicke $x_{WD} = 2 \cdot (0,2 \cdot r)^{1/n}$ durch eine zur Hubebene ($E_H$) senkrechte, über die Breite der Kurbelwange (6) verlaufende Kante (13) begrenzt ist, an die auf der vom Lagerzapfen (3) abgewandten Seite ein frei gestaltbarer Fortsatz (16) anschließt, dessen im wesentlichen radiale Erstreckung durch den Radius des hubzapfenseitigen Anlaufbundes (8) bestimmt ist.

3. Kurbelwelle nach Anspruch 1 oder 2, dadurch gekennzeichnet, daß der außenseitige Übergang (12') durch eine ebenflächige Schräge gebildet ist, wobei die Schräge von der durch die Wangendicke $x_{WD} = 2 \cdot (0,2 \cdot r)^{1/n}$ festgelegten Kante (13) ausgehend den Umfangsbereich (Oberkante 11) des lagerzapfenseitigen Anlaufbundes (9) tangiert.

4. Kurbelwelle nach einem oder mehreren der Ansprüche 1 - 3, dadurch gekennzeichnet, daß der außenseitige Übergang (12, 12') — in außenseitiger Stirnansicht der Kurbelwelle (6) gesehen — in beiderseits zur Hubebene ($E_H$) angeordnete, als Kegelmantelabschnitte gestaltete und zur Achse (5) des Lagerzapfens (3) rotationssymmetrische Bereiche (15) übergeht, derart, daß die Kante (13) in ihrer Länge als Sehne über dem den Hubzapfen (2) vom Radius (r) begrenzenden Kreis verbleibt.

5. Kurbelwelle nach einem oder mehreren der Ansprüche 1 - 4, wobei die Dicke der Kurbelwange (6) innenseitig vom Hubzapfen (2) zum Lagerzapfen (3) abnimmt, dadurch gekennzeichnet, daß ein Teil der Verjüngung über eine zur Hubebene ($E^H$) senkrechte Schrägfläche (17) bewirkt ist, die sich mit der Hubebene ($E_H$) in einer Verbindungsgeraden (18) schneidet, welche ihrerseits den Lagerzapfen (3) auf halber Länge an seiner Unterkante (19) schneidet und den hubzapfenseitigen Anlaufbund (8) an seinem Umfangsbereich (Unterkante 20) tangiert, und daß die Schrägfläche (17) ferner im Bereich der Achse (5) des Lagerzapfens (3) durch eine über die Breite der Kurbelwange (6) sich erstreckende Verrundung (21) in ein an der Kurbelwange (6) angeordnetes Gegengewicht (22) übergeht.

6. Kurbelwelle nach Anspruch 5, dadurch gekennzeichnet, daß die Schrägfläche (17) — in innenseitiger Stirnansicht der Kurbelwange (6) gesehen — in beiderseits zur Hubebene ($E_H$) angeordnete, als Kegelmantelabschnitte gestaltete und zur Achse (4) des Hubzapfens (2) rotationssymmetrische Bereiche (23) übergeht, derart, daß die Anschlußstelle (24) der Verrundung (21) an die Schrägfläche (17) in einer etwa dem Durchmessermaß (2·R) des Lagerzapfens (3) entsprechenden Breite verbleibt.

**Claims**

1. A one-piece crank-shaft for reciprocating piston engines, especially multi-cylinder internal combustion engines, in which a crank pin (2) of radius (r) and a bearing pin (3) of radius (R) are arranged with their axes (4, 5) in one plane of reciprocation $(E_H)$ and are connected by a crank arm (6) directed with its width transversely of the plane of reciprocation $(E_H)$, and the thickness of the crank *arm increases externally from the crank pin to the* bearing pin, while, in the region of an overlap (7) of crank pin and bearing pin or of abutment collars (8, 9) allocated to the respective pins (2, 3) on the crank arm, there is a maximum arm thickness (a), and the degree of the overlap (7) is determined by a spacing dimension (b) fixed in the plane of reciprocation between the upper edge (10) of the crank pin and an upper edge (11) of the bearing pin or its abutment collar (9), characterised in that an external transition (12, 12′) of the crank arm (6) from the crank pin (2) to the bearing pin (3) is determined essentially by the curve «y» = $(x/2)^n$ and the exponent (n) from n = $\log_{a/2} b$, where the curve «y» extends between a wall thickness $x_{WD}$ = $2 \cdot (0.2 \cdot r)^{1/n}$ ascertained at the distance y = $0.2 \cdot r$ from the upper edge (10) of the crank pin (2) and in accordance with the abovementioned converted equation and the maximum arm thickness (a) fixed by the upper edge (10) of the crank pin according to a distance y = b at the upper edge (11) of the abutment collar (9) on the bearing pin side.

2. A crank-shaft according to Claim 1, characterised in that the transition (12) at the position of the arm thickness $x_{WD}$ = $2 \cdot (0.2 \cdot r)^{1/n}$ is limited by an edge (13) extending over the width of the crank arm (6) and perpendicular to the plane of reciprocation $(E_H)$, which is adjoined on the side remote from the bearing pin (3) by a projection piece (16) which can be freely designed, the substantially radial extent of which is determined by the radius of the abutment collar (8) on the crank pin side.

3. A crank-shaft according to Claim 1 or 2, characterised in that the external transition (12′) is formed by a plane-surfaced slope, while the slope, starting from the edge (13) fixed by the arm thickness $x_{WD}$ = $2 \cdot (0.2 \cdot r)^{1/n}$, is tangential to the circumferential zone (upper edge 11) of the abutment collar (9) on the bearing pin side.

4. A crank-shaft according to any one or more of Claims 1 - 3, characterised in that the external transition (12, 12′) — seen in external end view of the crank-shaft (6) — merges into zones (15) arranged on both sides of the plane of reciprocation $(E_H)$, designed as cone surface sections and symmetrical in rotation in relation to the axis (5) of the bearing pin (3), in such manner that the edge (13) remains in its length as a chord over the circle defining the rank pin (2) of radius (r).

5. A crank-shaft according to any one or more of Claims 1 - 4, where the thickness of the crank arm (6) decreases internally from the crank pin (2) to the bearing pin (3), characterised in that a part of the taper is effected by way of an oblique face (17) perpendicular to the plane of reciprocation $(E^H)$, which face intersects with the plane of reciprocation $(E_H)$ in a straight line (18) of connection, which in turn intersects the bearing pin (3) at mid-length on its lower edge (19) and is tangential to the abutment collar (8) on the crank pin side at its circumferential zone (lower edge 20), and in that the oblique face (17) further merges, in the region of the axis (5) of the bearing pin (3), by a rounding (21) extending over the width of the crank arm (6), into a counter-weight (22) arranged on the crank arm (6).

6. A crank-shaft according to Claim 5, characterised in that the oblique face (17) — seen in internal end view of the crank arm (6) — merges into zones arranged on both sides of the plane of reciprocation $(E_H)$, formed as sections of cone surfaces and symmetrical in rotation in relation to the axis (4) of the crank pin (2), in such a way that the point of attachment (24) of the rounding (21) to the oblique face (17) remains in a width corresponding approximately to the diametric dimension $(2 \cdot R)$ of the bearing pin (3).

**Revendications**

1. Vilebrequin fait d'une seule pièce pour machines à piston, en particulier pour moteurs à combustion polycylindriques,

— pour lequel un manchon (2) de rayon (r) et un tourillon (3) de rayon (R) sont disposés avec leurs axes (4, 5) dans un plan de course commun $(E_H)$ et

— reliés au moyen d'un bras de manivelle (6) dont la largeur est orientée transversalement au plan de course $(E_H)$

— l'épaisseur du bras de manivelle augmentant côté extérieur, dans le sens allant du tourillon de poussée au tourillon de palier,

— une épaisseur de joue (a) maximale de bras de manivelle étant donnée dans la zone d'un recouvrement (7) entre manchon et tourillon, ou des collerettes de portée (8, 9) associées aux tourillons respectifs (2, 3)

— l'importance du recouvrement (7) étant déterminée par un plan de course situé entre l'arête supérieure (10) du tourillon de poussée et une arête supérieure (11) du tourillon de palier, ou la valeur de l'écartement (b) déterminée par sa collerette de portée (9), caractérisé en ce que:

— une transition (12, 12′) située côté extérieur du bras de manivelle (6) localisée entre le tourillon de poussée (2) et le tourillon de palier (3) est essentiellement déterminée par la courbe «y» = $(x/2)^n$

— l'exposant (n) étant déterminé à partir de n = $\log a/2^b$

— la courbe «y» s'étendant entre une épaisseur de joue située à une distance y = $0,1 \cdot r$ de l'arête supérieure (10) du tourillon de poussée (2) et déterminée selon l'équation mentionnée ci-dessus et inversée $x_{WD}$ = $2 \cdot (0,2 \; r)^{1/n}$ et

— l'épaisseur maximale (a) de la joue, correspondant à une distance y = b de l'arête supérieure (10) du tourillon de poussée, sur l'arête supérieure (11) de la collerette de portée (9) située côté tourillon de palier.

2. Vilebrequin selon la revendication 1, caractérisé en ce que:

— la transition (12) à l'emplacement de l'épaisseur de joue $x_{WD}$ = $2 \cdot (0,2 \; r)^{1/n}$ est limitée par une arête (13) s'étendant perpendiculairement au plan de course $(E_H)$, sur la largeur du bras de manivelle (6),

— arête (13) sur laquelle un prolongement (16) de forme libre se raccorde sur le côté opposé au tourillon de palier (3),

— prolongement (16) dont l'étendue principalement radiale est déterminée par le rayon de la collerette de portée (8) située côté tourillon de poussée.

3. Vilebrequin selon la revendication 1 ou 2, caractérisé en ce que:

— la transition (12') située côté extérieur est formée par une obliquité plane,

— l'obliquité étant tangente à la zone circonférentielle (arête supérieure 11) de la collerette de portée (9) située côté tourillon de palier, en partant de l'arête (13) déterminée par l'épaisseur de joue $x_{WD} = 2 \cdot (0,2\, r)^{1/n}$.

4. Vilebrequin selon une ou plusieurs des revendications 1 à 3 précédentes, caractérisé en ce que:

— la transition (12, 12') située côté extérieur, en observant frontalement le vilebrequin (6) depuis le côté extérieur, constitue une transition en des zones (15) disposées des deux côtés du plan de course ($E_H$), ayant la forme d'enveloppes coniques, et symétriques en rotation par rapport à l'axe (5) du tourillon de palier (3), de sorte que

— l'arête (13) reste sur la longueur une corde sur le cercle délimitant le tourillon de poussée (2) de rayon (r).

5. Vilebrequin selon une ou plusieurs des revendications 1 à 4, caractérisé en ce que:

— l'épaisseur du bras de manivelle (6) décroît sur le côté intérieur, en allant du tourillon de poussée (2) au tourillon de palier (3), caractérisé en ce que:

— une partie du rétrécissement est provoquée par une face oblique (17) perpendiculaire au plan de course ($E_H$)

— qui coupe le plan de course ($E_H$) en une droite de liaison (18) coupant pour sa part le tourillon de palier (3) à mi-longueur sur son arête inférieure (19) et étant tangente à la collerette de portée (8) située côté tourillon de poussée, sur sa zone de transition (arête inférieure 20),

— en ce que la face oblique (17) se transforme en outre, dans la zone de l'axe (5) du tourillon de palier (3), au moyen d'un arrondi (21) s'étendant sur la largeur du bras de manivelle (6), en un contrepoids (22) disposé sur le bras de manivelle.

6. Vilebrequin selon la revendication 5, caractérisé en ce que:

— la face oblique (17), en observant frontalement le vilebrequin (6) du côté intérieur, constitue une transition en des zones (23) disposées des deux côtés du plan de course ($E_H$), ayant la forme d'enveloppes coniques, et symétriques en rotation par rapport à l'axe (4) du tourillon de poussée (2), de sorte que

— le point de raccordement (24) de l'arrondi (21) situé sur la face oblique (17) reste d'une largeur correspondant à peu près au diamètre ($2 \cdot R$) du tourillon de palier (3).

Fig·3

Fig·1

Fig·2

EP 0 243 896 B1